# EUROPEAN PATENT APPLICATION

(11) **EP 2 352 099 A1**
(43) Date of publication of application: **03.08.2011**
(21) Application number: 09824387.6
(22) Date of filing: 21.10.2009
(51) Int. Cl.: G06F 13/14

(54) **SINGLE-HOST MULTI-WORKSTATION COMPUTER SYSTEM, EQUIPMENT CONFIGURATION METHOD THEREOF AND WORKSTATION CARD**

(30) Priority: 04.11.2008 WO PCT/CN2008/072919
(71) Applicant: SHENGLE INFORMATION TECHNOLOGY (SHANGHAI) CO., LTD, Zhangjiang High-Tech Park Pudong New Area Shanghai 201203 (CN)
(72) Inventor: Zhang, Weiming, Nanshan, Guangdong 518057 (CN)
(74) Representative: Hall, Graeme Keith
(86) International application number: PCT/CN2009/074554
(87) International publication number: WO 2010/051732

(57) **Abstract**

The invention discloses a single-host multi-workstation computer system and its equipment configuration method. The system includes a host, in which installs at least one separate graphic card and at least one workstation card; the workstation card is integrated with graphic cards and input/output interfaces. The method includes the steps:
(a) identify all workstation cards connected to the host; correlate each workstation card with an extended workstation; correlate all separate graphic cards with a primary workstation; (b) allocate human-machine interaction (HMI) devices connected to the same workstation card and graphic cards on the workstation card to the extended workstation corresponding to the workstation card; allocate other HMI devices to the primary workstation. The invention enables automatic "single-host multi-workstation" configuration of all the HMI devices; the configuration logic is simple and clear; the division of various workstations is intuitive; the user can perform hot plug and play to any USB device.

## Description

### Technical Field

The present invention discloses an equipment configuration method of single-host multi-workstation computer system and a workstation card, wherein the workstation card is integrated with at least one graphic card and at least one USB port. The present invention further provides a single-host multi-workstation computer system and a hardware add-in card.

### Background Art

Single-host multi-workstation technology for computer is a technology to install a small amount of hardware and the corresponding software (the software is a key part of the single-host multi-workstation technology, so is generally called a single-host multi-workstation software) in an ordinary computer to share one computer among multiple users at the same time, enabling the multiple users to share the hardware, software and peripheral resources of one computer individually at the same time, namely, one host serving multiple workstations.

Single-host multi-workstation technology allows one computer to serve as multiple ones, providing distinctive benefits. As to single-host multi-workstation software as mentioned above, there have been two products Bctwin and Hishare available in the market which are widely used in the field of electronic reading room and other fields.

If a computer is connected with several human-machine interaction devices, the human-machine interaction devices including but not limited to a graphic card, a display terminal <monitor, projector, television, etc.> a sound card, a speaker, an carphone, a microphone, a mouse, a keyboard, a joy pad and other input/output devices, (the same below); when this computer is logged in and/or used by multiple user names, it is required to allocate these human-machine interaction devices to different workstations according to the users' desires (each workstation is composed of one or several human-machine interaction devices sharing one host's resources for one user's use, the same below). There have been several solutions for the allocation method and system, but these solutions still have some defects.

The first solution is a popular technical solution in nowadays, which includes the following three steps:
A. Connect all the human-machine interaction devices to a computer, switch on the computer and log into the computer, at this time, all the human-machine interaction devices belong to one login user.
B. Run the single-host multi-workstation software, enter the workstation configuration interface, display all the human-machine interaction devices to the computer user, and then the computer user allocate these human-machine interaction devices to different workstations.
C. Afterwards, when the computer is in a multi-workstation state, all the human-machine interaction devices are automatically allocated to different workstations according to the allocation in step 2 under the control of the single-host multi-workstation software. Different computer users may log into one workstation by using a corresponding user name and individually use this computer.

Defects of this solution are as follows: in step 2, namely the step of workstation configuration, the user is required to have professional computer knowledge, thus increasing the difficulty in configuration; moreover, the configuration method adopted by this solution is not intuitive and direct.

The second technical solution is entitled a system and method for configuring a multi-user computer system with Patent No.: US7030836. This patent provides another method for configuring human-machine interaction devices for various users of a single-host multi-workstation computer. In this method, non-display human-machine interaction devices are firstly configured by software, and then the computer user participates in the configuration of human-machine interaction display devices by following prompts in an intuitive and manual way, thereby saving the work that the user manually configures the non-display human-machine interaction devices and making the configuration of the display devices more intuitive.

This patent adopts the concept of "collection". All the peripheral devices belonging to one workstation are defined to be a collection in this patent.

This solution includes the following three steps:
1. Connect all the human-machine interaction devices to a computer, switch on the computer and log into the computer, at this time, all the human-machine interaction devices belong to one login user.
2. Run the single-host multi-workstation software, and the computer will automatically perform the configuration of the human-machine interaction devices (steps c and d require the manual participation of the user); the configuration process is as follows:
   A. Form a collection by using all the non-USB non-display human-machine interaction devices (this collection is temporarily not complete as display devices are temporarily not included);
   B. Form a plurality of collections by using all the USB non-display human-machine interaction devices according to a certain logic (display devices temporarily not included), wherein the logic is complicated; certain prerequisites are set; and it is needed to analyze the connection relations between all the USB devices and the USB Hubs; however, the technique of adding hardware feature identifications to USB Hubs is not involved.
   C. The collections as defined according to the abovementioned logic, each collection having at least a keyboard or a mouse. The task of this step is to allocate the display devices to different collections one by one. Therefore, the system shows a prompt dialog box in a first display device, instructing the user to press any key of a keyboard or a mouse, wherein the keyboard or the mouse belongs to a workstation that the user wants the first display device to be included, and then the display device is added to the collection that the keyboard or the mouse belongs to according to the key pressed.
   D. Other display devices are also implemented as per step c one by one.
3. After the configuration process, various workstations enter into the operating state according to the configuration result. Different computer users log into any one of the workstations by using a respective user name and individually use this computer.

The defects of the above patent are as follows:
Firstly, according to the configuration method of this patent, it is required that each workstation has at least a keyboard (or other human-machine interaction input device of designated type). Such a requirement is not a reasonable precondition because the configuration cannot be completed if a workstation does not have a keyboard (or the human-machine interaction input device of designated type).
Secondly, according to the configuration method of this patent, those human-machine interaction devices plugged in different USB Hubs (sub-Hub and parent-Hub) may belong to different collections (corresponding to different workstations), or may be forced to belong to a same collection (corresponding to the same workstation). Common users are prone to take the latter as a mistake.
Thirdly, when the system enters into the multi-workstation operating state after the configuration, if those human-machine interaction devices after configuration are disconnected from the host, for example, being unplugged by the user or being in a poor contact with the host, else if the USB devices after configuration are unplugged from one USB port and plugged into another port of the same USB Hub, configuration errors may take place, leading to the operation of some human-machine interaction devices failing to conform to the configuration result; that is to say, the "one-host multi-user" computer and various human-machine interaction devices according to this solution may have unfavorable operating stability.

### Summary of the Invention

To overcome the above technical defects, the present invention provides an equipment configuration method of single-host multi-workstation computer system, meanwhile, the present invention further provides a workstation card and a single-host multi-workstation computer system containing this workstation card as well as a hardware add-in card which could be inserted into a slot of a mainboard. After the workstation card is inserted into the mainboard of the computer, if this computer is to be configured into multiple workstations running individually and independently, the configuration method can be automatically completed by a single-host multi-workstation software, and the system is highly stable.

The detailed technical solution is as follows:
An equipment configuration method of single-host multi-workstation computer system, wherein the system comprises a host, in which installs at least one separate graphic card and at least one workstation card; the workstation card is integrated with at least one graphic card and at least one interface for connecting with an input device; the interface for connecting with an input device is a USB port or a PS/2 port or a serial port; the method performs single-host multi-workstation configuration by using the system, wherein the method includes the following steps:
   (1) Identify all the workstation cards connected to the host;
      Correlate each of the workstation cards with an extended workstation;
      Correlate all the separate graphic cards with a primary workstation;
   (2) Allocate human-machine interaction devices connected to the same workstation card to the extended workstation corresponding to the workstation card; allocate other human-machine interaction devices to the primary workstation.

It shall be noted that, the extended workstation refers to a workstation formed by using the human-machine interaction devices and display devices connected to a certain workstation card to share the host resources. The primary workstation refers to a workstation formed by using those human-machine interaction devices and display devices connected to other than a workstation card to share the host resources. The human-machine interaction devices connected to the same workstation card include those human-machine interaction devices connected directly to a workstation card or connected through a USB Hub to a workstation card.

The step "identify all the workstation cards connected to the host" is preferably as follows: "identify those graphic cards and/or USB ports and/or PS/2 ports and/or serial ports integrated on the workstation cards of the host; and divide the graphic cards and/or USB ports and/or PS/2 ports and/or serial ports integrated on the same workstation card into one group; each group is correlated with a workstation card."

The step "identify all the workstation cards connected to the host" is preferably as follows: "a. identify the devices inserted in various slots of the mainboard as well as the peripheral interfaces of these devices, namely, the interfaces for connecting to external input/output devices. b. if the peripheral interfaces of the device inserted in a certain slot have both a video output interface for connecting with a display device and an interface for connecting with an input device, it is indicated that the device inserted in this slot is a workstation card".

Another preferable way is that, the computer may identify a workstation card as a new type of device, different from a graphic card, then the step "identify all the workstation cards connected to the host" can be performed in a traditional way, for example, being automatically identified via a common way of the windows operating system.

The workstation card is inserted into a slot of the mainboard inside the host or is integrated onto the mainboard. The situation of workstation card being integrated onto the mainboard, similar with the situation of workstation card being inserted onto the mainboard, is also within the protection scope of the present invention. As to the situation of workstation card being integrated onto the mainboard, a preferable way is that, a predetermined corresponding relationship exists between a certain video output interface and certain interfaces for connecting with input devices on the mainboard, and the corresponding relationship can be retrieved by the single-host multi-workstation software.

The equipment configuration method of single-host multi-workstation computer system, wherein, the human-machine interaction device is selected from one of keyboard, mouse, remote control receiver, joy stick, sound card, speaker, microphone, camera and handwriting pen or the combination. If new input devices are developed, for example an input device of golf club for playing golf, they are also within the protection scope of the present invention. The graphic cards integrated onto the workstation card and the human-machine interaction devices connected to the workstation card are correlated with the same workstation. The USB chip corresponding to the USB port integrated onto the workstation card is located on the workstation card or the computer mainboard. The graphic cards and the interfaces for connecting with input devices, namely the USB ports or PS/2 ports or serial ports of the workstation card, shall be corresponded to each other in hardware design. A preferable way for implementing the workstation card is to integrate on a graphic card the interfaces of other human-machine interaction connection devices (such as a USB Hub) or other human-machine interaction devices.

The equipment configuration method of single-host multi-workstation computer system, wherein, the step "correlate each of the workstation cards with an extended workstation" is detailed as below: set the number of the extended workstations in the system to be the same as the number of the workstation cards identified, and correlate the extended workstations and the workstation cards one to one.

The equipment configuration method of single-host multi-workstation computer system, wherein, before step (1) of the configuration method, step (0) as below is further included: make all the graphic cards and workstation cards connected to the host display a same user interface.

The workstation card as used in the equipment configuration method, wherein, the workstation card is integrated with at least one graphic card and at least one interface for connecting with input devices; the interface for connecting with input devices is a USB port or a PS/2 port or a serial port.

The workstation card, wherein, the USB chip corresponding to the USB port integrated on the workstation card is located on the workstation card or the computer mainboard. The graphic cards and the interfaces for connecting with input devices, namely the USB ports or PS/2 ports or serial ports of the workstation card, shall be corresponded to each other in hardware design.

A single-host multi-workstation computer system, the system comprising a host, wherein at least one separate graphic card and at least one workstation card as mentioned above are installed in the host; the graphic cards on the same workstation card and the human-machine interaction devices connected to this workstation card are correlated with a same workstation. The separate graphic cards, referring to those graphic cards commonly used in a computer, include graphic cards integrated onto the computer mainboard and separate graphic cards inserted onto the computer mainboard. The separate graphic cards do not include graphic cards integrated on workstation cards. The separate graphic cards have a coequal relationship with the workstation cards, but they are different from the workstation cards in the present invention. The separate graphic cards are not integrated with interfaces for connecting with input devices.

The equipment configuration method, wherein, after step (2), further includes the following step: when identifying a new human-machine interaction device at any moment after step (2), if the device is connected to a workstation card, the device is allocated to the extended workstation corresponding to the workstation card; if the device is not connected to a workstation card, the device is allocated to the primary workstation.

A workstation card, in which integrates at least one graphic card and at least one interface for connecting with input devices, namely a USB port or a PS/2 port or a serial port; the graphic card and the interface for connecting with input devices, namely the USB port or PS/2 port or serial port are corresponded to each other in hardware design. In a single-host multi-workstation computer system, the graphic cards of the same workstation card and the human-machine interaction devices connected to the workstation card are correlated with the same workstation.

The present invention provides a single-host multi-workstation computer system, wherein the system comprises a host; the host has at least one separate graphic card and at least one workstation card installed in it; graphic cards of the same workstation card and human-machine interaction devices connected to the workstation card are correlated with a same workstation, characterized in that, the above-mentioned equipment configuration method is adopted.

The present invention further provides a hardware add-in card which can be inserted into a slot of a mainboard, wherein, the add-in card is integrated with two or more workstation cards as mentioned above.

The present invention further provides an equipment configuration method of single-host multi-workstation computer system, wherein the method includes the following steps:
(1) Identify all the workstation cards connected to a host;
   Correlate each of the workstation cards with an extended workstation;
   Correlate all the separate graphic cards with a primary workstation;
(2) Allocate human-machine interaction devices connected to the same workstation card to the extended workstation corresponding to the workstation card; allocate other human-machine interaction devices to the original workstation.

The present invention further provides an equipment configuration module of single-host multi-workstation computer system, wherein the system includes a host, in which installs at least one separate graphic card and at least one workstation card; the workstation card is integrated with a graphic card and an input/output interface; wherein the equipment configuration module includes: an identification unit, used to identify all the workstation cards connected to the host; a first control unit, used to correlate each of the workstation cards with an extended workstation; a second control unit, used to correlate all the separate graphic cards with a primary workstation; a first allocation unit, used to allocate the human-machine interaction devices connected to the same workstation card and the graphic cards integrated in the workstation card to the extended workstation corresponding to the workstation card; a second allocation unit, used to allocate other human-machine interaction devices to the primary workstation.

The human-machine interaction device is selected from one of keyboard, mouse, remote control receiver, joy stick, sound card, speaker, microphone, camera and handwriting pen or the combination.

The input/output interface integrated on the workstation card includes a USB port, a PS2 port or a serial port.

The "human-machine interaction devices connected to the same workstation card" as described in the first allocation unit refer to human-machine interaction devices directly connected to the workstation card and/or human-machine interaction devices connected through a USB Hub in connection with a USB port of the workstation card.

The first control unit includes: a quantity setting unit, used to set the number of the extended workstations in the system to be the same as the number of the workstation cards identified, so as to correlate the extended workstations and the workstation cards one to one.

The equipment configuration module further includes: an initializing unit, used to make all the separate graphic cards connected to the host and the graphic cards integrated on the workstation cards display a same user interface.

The separate graphic cards exclude the graphic cards integrated on a workstation card, but include graphic cards integrated on a computer mainboard and separate graphic cards inserted onto a computer mainboard.

The equipment configuration module further includes: a re-identification unit, which is used at any moment after the operating steps of the first allocation unit and the second allocation unit; when a new human-machine interaction device is identified, if the device is connected to a workstation card, the device is allocated to the extended workstation corresponding to the workstation card; if the device is not connected to a workstation card, the device is allocated to the primary workstation.

The present invention further provides an equipment configuration module of single-host multi-workstation computer system, wherein the equipment configuration module includes: an identification unit, used to identify all the workstation cards connected to a host; a first control unit, used to correlate each of the workstation cards with an extended workstation; a second control unit, used to correlate all the separate graphic cards with a primary workstation; a first allocation unit, used to allocate human-machine interaction devices connected to the same workstation card and graphic cards integrated on this workstation card to the extended workstation corresponding to this workstation card; a second allocation unit, used to allocate other human-machine interaction devices to the primary workstation.

The favorable effects of the present invention are as below:
Firstly, compared with the US patent in the prior art, by adopting the configuration method of the present invention in a computer, the single-host multi-workstation configuration of all the human-machine interaction devices can be automatically completed, and the configuration logic is simple and clear.
Secondly, the display devices and human-machine interaction devices connected to the same workstation card is correlated with the same extended workstation; when the user uses the computer in a single-host multi-workstation way, the division of various workstations is direct and intuitive.
Thirdly, compared with the US patent in the prior art, in a multi-workstation working state, the user can perform hot plug and play to any USB device (the hot plug and play action of the user may just increase or reduce a device in the corresponding workstation, rather than exert other influences). The user may also connect a USB device without configuration to the host, and then the device is automatically allocated to the workstation corresponding to the workstation card and runs normally in this workstation

### Brief Description of the Drawings

FIG. 1 is a schematic view of the appearance of a workstation card according to embodiment one of the present invention.
FIG. 2 is a schematic view showing the connection of the single-host multi-workstation computer system based on the workstation card and other devices according to embodiment one of the present invention.
FIG. 3 is a schematic view showing the division of modules of the single-host multi-workstation software according to embodiment one of the present invention.
FIG. 4 is a logic view of the equipment configuration method of single-host multi-workstation system according to embodiment one of the present invention.
FIG. 5 is a structural view of the parameter of table of human-machine interaction devices of various workstations of the single-host multi-workstation software according to embodiment one of the present invention.
FIG. 6 is a schematic view showing the values of the parameter of table of human-machine interaction devices of various workstations of the single-host multi-workstation according to embodiment one of the present invention.
FIG. 7 is a schematic view showing the dynamic configuration logic of new human-machine interaction devices according to embodiment one of the present invention.
FIG. 8 is a schematic view of the division of various workstations of the single-host multi-workstation according to embodiment one of the present invention.
FIG. 9 is a schematic view of the division of various workstations of the single-host multi-workstation at another moment according to embodiment one of the present invention.
FIG. 10 is a schematic view of the appearance of a workstation card according to embodiment two of the present invention.
FIG. 11 is a schematic view of the appearance of a workstation card according to embodiment three of the present invention.
FIG. 12 is a schematic view of the appearance of a workstation card according to embodiment four of the present invention.
FIG. 13 is a schematic view of the appearance of a hardware add-in card according to one embodiment of the present invention.
FIG. 14 is a structural view of the equipment configuration module of "single-host multi-workstation" computer system according to embodiment six of the present invention.
FIG. 15 is a structural view of the first control unit in the equipment configuration module of "single-host multi-workstation" computer system according to embodiment seven of the present invention.
FIG. 16 is a structural view of the equipment configuration module of "single-host multi-workstation" computer system comprising an initializing unit according to embodiment eight of the present invention.
FIG. 17 is a structural view of the equipment configuration module of "single-host multi-workstation" computer system according to embodiment nine of the present invention.

### Detailed Description of Preferred Embodiments

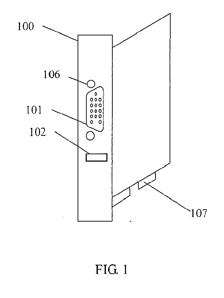

The present invention is further detailed in combination with the drawings and the embodiments. Please refer to FIG. 1, FIG. 1 is a schematic view of a workstation card according to embodiment one of the present invention, wherein, the workstation card 100 is provided with a gold finger 107, which can be inserted into a slot of a mainboard in a computer host. A USB port 102 and a video output interface 101 are disposed on the card; on both sides of the video output interface 101 are fixing thread holes 106.

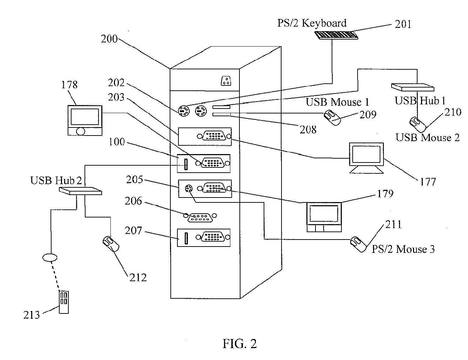

Please refer to FIG. 2, FIG. 2 shows a single-host multi-workstation computer system based on the workstation card, which comprises a computer host 200; in the computer host 200 installs a separate graphic card 203, a workstation card 100, a workstation card 205 and a workstation card 207. The host is provided with a USB port 208, a PS/2 port 202 and a serial port 206. A mouse 212 and a USB remote controller 213 are connected to the workstation card 100 via USB Hub 2; a PS/2 mouse 211 is connected to the workstation card 205. Meanwhile, the computer host 200 is further connected with a PS/2 keyboard 201 and a USB mouse 209, and is connected with a mouse 210 via USB Hub 1. In addition, video interfaces on the graphic card 203 and the workstation cards 100, 205 are connected with display devices respectively. No human-machine interaction device is connected to the workstation card 207.

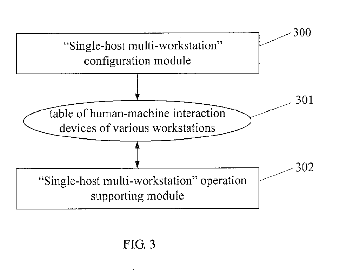

Please refer to FIG. 3, to configure the computer system in FIG. 2 to be a single-host multi-workstation system, the present solution installs a set of single-host multi-workstation software in the system, generally, the software includes 2 modules and a common parameter; the 2 modules are single-host multi-workstation configuration module 300 and single-host multi-workstation operation supporting module 302 respectively; the common parameter is table of human-machine interaction devices of various workstations 301.

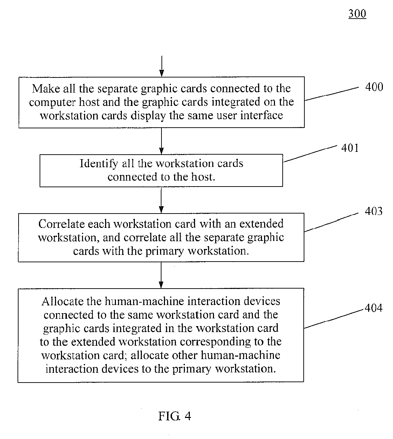

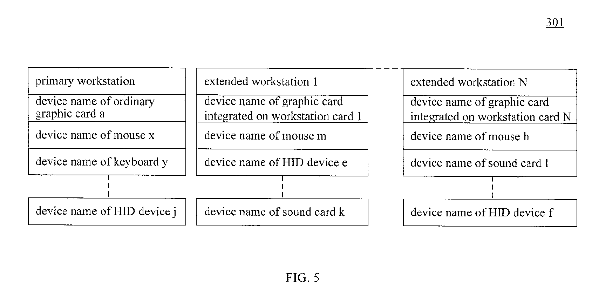

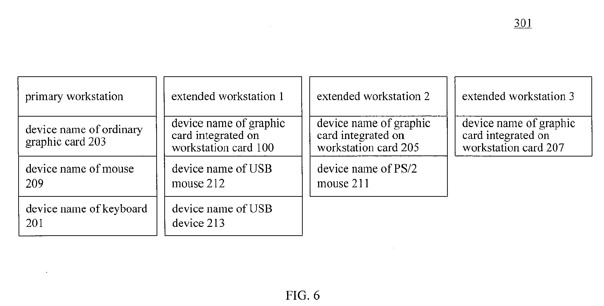

Please refer to FIG. 4, FIG. 5 and FIG. 6, after the installation of the single-host multi-workstation software, run the software, so that the single-host multi-workstation configuration module 300 of embodiment one is automatically performed. The software will perform the below configuration method comprising the following steps:
1. Make all the separate graphic cards connected to the computer host and the graphic cards integrated on the workstation cards display a same user interface (step 400), the result of this step is that, the current monitor 177, television 178 and television 179 will display the same user interface.
2. Identify all the workstation cards connected to the host (step 401), detailed as:
   identify those graphic cards and/or USB ports and/or PS/2 ports and/or serial ports integrated on the workstation cards on the host; divide the graphic cards and/or USB ports and/or PS/2 ports and/or serial ports integrated on the same workstation car into one group; each group corresponds to a workstation card.
3. Correlate each of the workstation cards with an extended workstation, and correlate all the separate graphic cards with a primary workstation (step 403), detailed as:
   for each workstation card, add an extended workstation in the parameter of table of human-machine interaction devices of various workstations 301. The data structure of the parameter of table of human-machine interaction devices of various workstations 301 is as shown in FIG. 5, which is a chained list; the chained list has one and only one head node, used to record the device names of all the devices of the primary workstation; other nodes of the chained list respectively record the device names of all the devices of one extended workstation;
4. Allocate the human-machine interaction devices connected to the same workstation card and the graphic cards integrated on this workstation card to the extended workstation corresponding to this workstation card; allocate other human-machine interaction devices to the primary workstation (step 404), detailed as: respectively record the device names of the graphic cards integrated on a respective workstation card and the device names of the devices connected to the USB ports, PS/2 ports or serial ports integrated on the respective workstation card (including devices indirectly connected to the workstation card via a USB Hub) into the corresponding chained list node in the "parameter of table of human-machine interaction devices of various workstations" 301 (a workstation card corresponding to an extended workstation, an extended workstation corresponding to a chained list node); record the device names of the separate graphic cards on the host and other human-machine interaction devices connected to the host into the chained list node corresponding to the primary workstation. The execution result of this step is that: the values of the parameter of table of human-machine interaction devices of various workstations 301 are as shown in FIG. 6. There are 4 list nodes, and each node indicates a workstation.

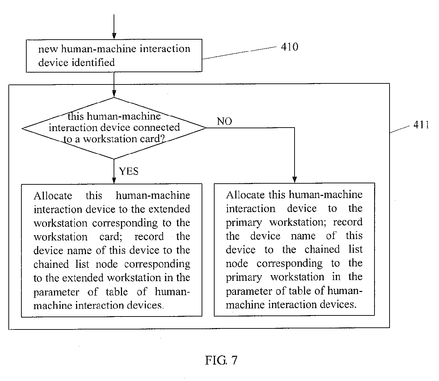

Please refer to FIG. 3 and FIG. 7, after the execution of the single-host multi-workstation configuration module 300, automatically perform the single-host multi-workstation operation supporting module 302, and at the same time dynamically maintain the parameter of table of human-machine interaction devices of various workstations 301, detailed as: switch the computer into a multi-workstation operating status according to the parameter of "table of human-machine interaction devices of various workstations" 301. In the multi-workstation operating status, the computer system is divided into multiple workstations; these multiple workstations operate individually and independently, and can be used by multiple users individually and independently. At this time, if a certain human-machine interaction device is disconnected from the host, the device name of this human-machine interaction device is deleted from the parameter 301; if a new human-machine interaction device is identified by the host, the device name of this device is added to the chained list node of the corresponding workstation in the parameter 301. The detailed logic, as described in FIG. 7, comprises the following steps:
1. A new human-machine interaction device is identified (step 410).
2. Determine whether this human-machine interaction device is connected to a workstation card (step 411).

If so, allocate this human-machine interaction device to the extended workstation corresponding to the workstation card; record the device name of this device to the chained list node corresponding to the extended workstation in the parameter of table of human-machine interaction devices.

If not, allocate this human-machine interaction device to the primary workstation; record the device name of this device to the chained list node (head node of the chained list) corresponding to the primary workstation in the parameter of table of human-machine interaction devices.

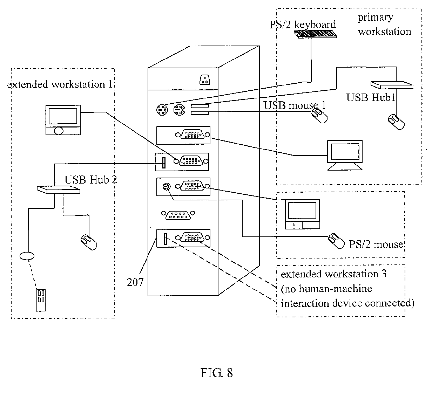

Please refer to FIG. 8, the computer system in embodiment one, after finishing the above steps, is divided to a primary workstation and 3 extended workstations; the 4 stations operate individually and independently, wherein the extended workstation 3 is in an idle state as it is not connected with any human-machine interaction device.

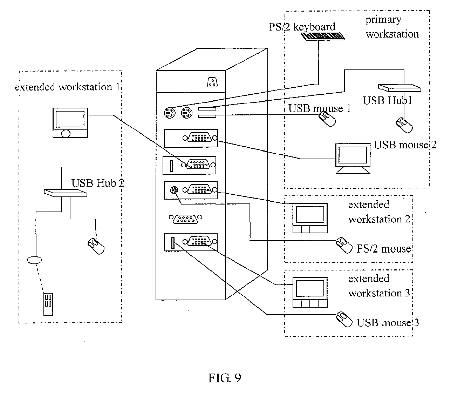

Please refer to FIG. 8 and FIG 9, once the workstation card 207 is connected with a corresponding device, as shown in FIG. 9, the extended workstation 3 together with other workstations can serve 4 users at the same time for individual use.

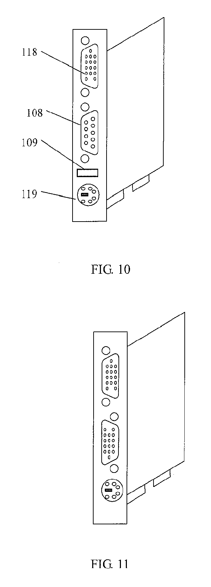

Please refer to FIG. 10, the workstation card according to embodiment two of the present invention is integrated with a graphic card, a serial port 108, a USB port 109 and a PS/2 port 119. A video output interface 118 of the graphic card is shown in the figure.

Please refer to FIG. 11, the workstation card according to embodiment three of the present invention is integrated with two graphic cards (each graphic card corresponding to a video output interface) and a PS/2 port.

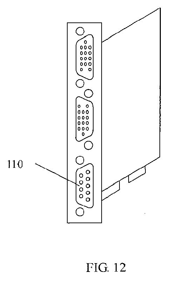

Please refer to FIG. 12, the workstation card according to embodiment four of the present invention is integrated with two graphic cards (each graphic card corresponding to a video output interface) and a serial port 110.

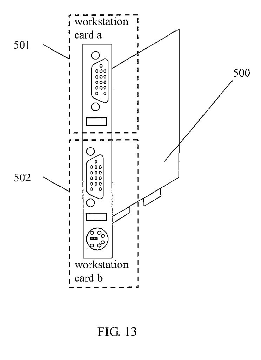

Please refer to FIG. 13, the workstation card according to the hardware add-in card embodiment of the present invention is integrated with a kind of hardware add-in card 500 which can be inserted into a slot of the mainboard. On the add-in card integrates two workstation cards, respectively workstation card 501 and workstation card 502. Installing the hardware add-in card in the host is similar to installing two workstation cards (workstation card 501 and workstation card 502).

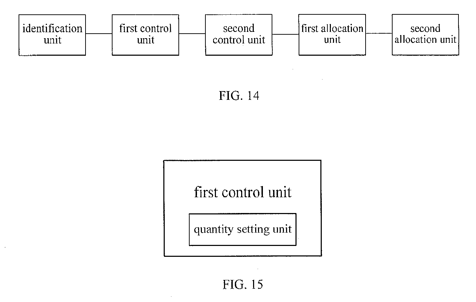

Please refer to FIG. 14, the present invention further discloses embodiment six; embodiment six discloses an equipment configuration module of single-host multi-workstation computer system, wherein the equipment configuration module includes:
an identification unit, used to identify all the workstation cards connected to the host;
a first control unit, used to correlate each of the workstation cards with an extended workstation;
a second control unit, used to correlate all the separate graphic cards with the primary workstation;
a first allocation unit, used to allocate the human-machine interaction devices connected to the same workstation card and the graphic cards integrated on the workstation card to the extended workstation corresponding to the workstation card;
a second allocation unit, used to allocate other human-machine interaction devices to the primary workstation.

The present invention further discloses embodiment seven; embodiment seven also discloses an equipment configuration module of single-host multi-workstation computer system, wherein the system comprises a host; in the host installs at least one separate graphic card and at least one workstation card; on the workstation card integrates a graphic card and an input/output interface; wherein the equipment configuration module includes:
an identification unit, used to identify all the workstation cards connected to the host;
a first control unit, used to correlate each of the workstation cards with an extended workstation;
a second control unit, used to correlate all the separate graphic cards with the primary workstation;
a first allocation unit, used to allocate the human-machine interaction devices connected onto the same workstation card and the graphic cards integrated on the workstation card to the extended workstation corresponding to the workstation card;
a second allocation unit, used to allocate other human-machine interaction devices to the primary workstation.

Wherein, the human-machine interaction device is selected from one of keyboard, mouse, remote control receiver, joy stick, sound card, speaker, microphone, camera and handwriting pen or the combination.

Wherein, the input/output interface integrated on the workstation card includes USB port, PS2 port or serial port.

Wherein, the "human-machine interaction devices connected to the same workstation card" in the first allocation unit refer to the human-machine interaction devices directly connected to the workstation card and/or the human-machine interaction devices connected through a USB Hub connected to the USB port of the workstation card.

Please refer to FIG. 15, the first control unit includes: a quantity setting unit, used to set the number of extended workstations in the system to be the same as the number of the workstation cards identified so as to correlate the extended workstations and the workstation cards one to one.

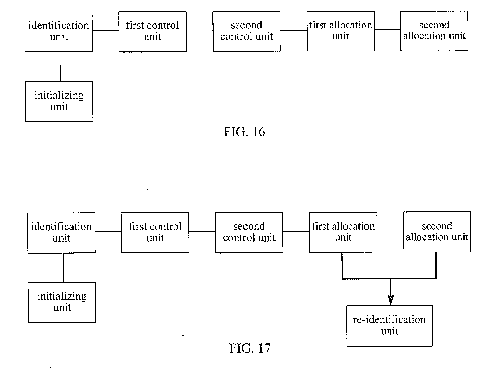

Please refer to FIG. 16, the present invention further discloses embodiment eight; the equipment configuration module of single-host multi-workstation computer system disclosed in embodiment eight is substantially the same as that in embodiment seven; the main difference is that, the equipment configuration module further includes: an initializing unit, used to make all the separate graphic cards connected to the host and the graphic cards integrated on the workstation cards display the same user interface.

Wherein the separate graphic cards exclude the graphic cards integrated on the workstation cards, but include the graphic cards integrated on the computer mainboard and the separate graphic cards inserted into the computer mainboard.

Please refer to FIG. 17, the present invention further discloses embodiment nine; the equipment configuration module of single-host multi-workstation computer system disclosed in embodiment nine is substantially the same as that in embodiment eight; the main difference is that, the equipment configuration module further includes: a re-identification unit, which is used at any moment after the operating steps of the first allocation unit and the second allocation unit; when a new human-machine interaction device is identified, if the device is connected to a workstation card, then the device is allocated to the extended workstation corresponding to the workstation card; if the device is not connected to a workstation card, then the device is allocated to the primary workstation.

Although the present invention is explained in detail by several embodiments, it is still obvious for those skilled in this art that various substitutions, revisions and changes may be made according to the abovementioned description. Therefore, all these substitutions, revisions and changes shall be within the spirit and scope claimed by the Claims herein.

## Claims

1. An equipment configuration method of single-host multi-workstation computer system, wherein the system comprises a host, in which installs at least a separate graphic card and at least a workstation card, the workstation card being integrated with a graphic card and an input/output interface; the method performing configuration of single-host multi-workstation by means of the system, **characterized in that**, the method comprises the following steps:
(1) identifying all the workstation cards connected to the host;
correlating each of the workstation cards with an extended workstation;
correlating all the separate graphic cards with a primary workstation;
(2) allocating human-machine interaction devices connected to the same workstation card and the graphic cards integrated on the workstation card to the extended workstation corresponding to the workstation card; allocating other human-machine interaction devices to the primary workstation.

2. The equipment configuration method of single-host multi-workstation computer system as claimed in claim 1, **characterized in that**, the human-machine interaction device is selected from one of keyboard, mouse, remote control receiver, joy stick, sound card, speaker, microphone, camera and handwriting pen or the combination.

3. The equipment configuration method of single-host multi-workstation computer system as claimed in claim 1, **characterized in that**, the input/output interface integrated on the workstation card includes a USB port, a PS2 port or a serial port.

4. The equipment configuration method of single-host multi-workstation computer system as claimed in any one of claims 1-3, **characterized in that**, the "human-machine interaction devices connected to the same workstation card" refer to the human-machine interaction devices directly connected to the workstation card and/or the human-machine interaction devices connected through a USB Hub in connection with a USB port of the workstation card.

5. The equipment configuration method of single-host multi-workstation computer system as claimed in claim 1, **characterized in that**, the step of "correlating each of the workstation cards with an extended workstation" is detailed as: setting a number of extended workstations in the system to be the same as a number of the workstation cards identified so as to correlate the extended workstations and the workstation cards one to one.

6. The equipment configuration method of single-host multi-workstation computer system as claimed in claim 1, **characterized in that**, before step (1) of the configuration method, step (0) as below is further comprised: making all the separate graphic cards connected to the host and the graphic cards integrated on the workstation cards display a same user interface.

7. The equipment configuration method of single-host multi-workstation computer system as claimed in claim 1, **characterized in that**, the separate graphic card excludes the graphic card integrated on a workstation card, but includes a graphic card integrated on a computer mainboard and a separate graphic card inserted into a computer mainboard.

8. The equipment configuration method as claimed in any one of claim 1, 2, 3. 5, 6 or 7, **characterized in that**, after step (2), further comprising the following step:
when identifying a new human-machine interaction device at any moment after step (2) is finished, if the device is connected to a workstation card, then allocating the device to the extended workstation corresponding to the workstation card; if the device is not connected to a workstation card, then allocating the device to the primary workstation.

9. A workstation card as used in the equipment configuration method as *claimed in any one of claims 1-8, **characterized in that**, the workstation card is integrated with at least one graphic card and at least one interface for connecting to an input device, the interface for connecting to an input device being a USB port or a PS/2 port or a serial port.

10. A single-host multi-workstation computer system, wherein the system comprises a host, in which installs at least one separate graphic card and at least one workstation card as claimed in claim 9, the graphic cards on the same workstation card and human-machine interaction devices connected to the workstation card being correlated with a same workstation, **characterized in that**, adopting the equipment configuration method as claimed in any one of claims 1-6.

11. A hardware add-in card, which could be inserted into a slot of a mainboard, **characterized in that**, the add-in card is integrated with two or more workstation cards as claimed in claim 9.

12. An equipment configuration method of single-host multi-workstation computer system, **characterized in that**, the method comprises the following steps:
(1) identifying all workstation cards connected to a host;
correlating each of the workstation cards with an extended workstation;
correlating all separate graphic cards with a primary workstation;
(2) allocating human-machine interaction devices connected to the same workstation card and graphic cards integrated on the workstation card to the extended workstation corresponding to the workstation card; allocating other human-machine interaction devices to the primary workstation.

13. The equipment configuration method of single-host multi-workstation computer system as claimed in claim 12, **characterized in that**, the human-machine interaction device is selected from one of keyboard, mouse, remote control receiver, joy stick, sound card, speaker, microphone, camera and handwriting pen or the combination.

14. The equipment configuration method of single-host multi-workstation computer system as claimed in claim 12, **characterized in that**, an input/output interface integrated on the workstation card includes a USB port, a PS2 port or a serial port.

15. The equipment configuration method of single-host multi-workstation computer system as claimed in any one of claims 12-14, **characterized in that**, the "human-machine interaction devices connected to the same workstation card" refer to the human-machine interaction devices directly connected to the workstation card and/or the human-machine interaction devices connected through a USB Hub in connection with a USB port of the workstation card.

16. The equipment configuration method of single-host multi-workstation computer system as claimed in claim 12, **characterized in that**, the step of "correlating each of the workstation cards with an extended workstation" is detailed as: setting a number of extended workstations in the system to be the same as a number of the workstation cards identified so as to correlate the extended workstations and the workstation cards one to one.

17. The equipment configuration method of single-host multi-workstation computer system as claimed in claim 12, **characterized in that**, before step (1) of the configuration method, step (0) as below is further comprised: making all the separate graphic cards connected to the host and the graphic cards integrated on the workstation cards display a same user interface.

18. The equipment configuration method of single-host multi-workstation computer system as claimed in claim 12, **characterized in that**, the separate graphic card excludes the graphic card integrated on a workstation card, but includes a graphic card integrated on a computer mainboard and a separate graphic card inserted into a computer mainboard.

19. The equipment configuration method as claimed in any one of claim 12, 13, 14, 16, 17 or 18, **characterized in that**, after step (2), further comprising the following step:
when identifying a new human-machine interaction device at any moment after step (2) is finished, if the device is connected to a workstation card, then allocating the device to the extended workstation corresponding to the workstation card; if the device is not connected to a workstation card, then allocating the device to the primary workstation.

20. A workstation card as used in the equipment configuration method as claimed in any one of claims 12-19, **characterized in that**, the workstation card is integrated with at least one graphic card and at least one interface for connecting to an input device, the interface for connecting to an input device being a USB port or a PS/2 port or a serial port.

21. An equipment configuration module of single-host multi-workstation computer system, wherein the system comprises a host, in which installs at least one separate graphic card and at least one workstation card, the workstation card being integrated with a graphic card and an input/output interface; **characterized in that**, the equipment configuration module comprises:
an identification unit, used to identify all the workstation cards connected to the host;
a first control unit, used to correlate each of the workstation cards with an extended workstation;
a second control unit, used to correlate all the separate graphic cards with a primary workstation;
a first allocation unit, used to allocate human-machine interaction devices connected to the same workstation card and the graphic cards integrated on the workstation card to the extended workstation corresponding to the workstation card;
a second allocation unit, used to allocate other human-machine interaction devices to the primary workstation.

22. The equipment configuration module of single-host multi-workstation computer system as claimed in claim 21, **characterized in that**, the human-machine interaction device is selected from one of keyboard, mouse, remote control receiver, joy stick, sound card, speaker, microphone, camera and handwriting pen or the combination.

23. The equipment configuration module of single-host multi-workstation computer system as claimed in claim 21, **characterized in that**, the input/output interface integrated on the workstation card includes a USB port, a PS2 port or a serial port.

24. The equipment configuration module of single-host multi-workstation computer system as claimed in any one of claims 21-23, **characterized in that**, the "human-machine interaction devices connected to the same workstation card" refer to the human-machine interaction devices directly connected to the workstation card and/or the human-machine interaction devices connected through a USB Hub in connection with a USB port of the workstation card.

25. The equipment configuration module of single-host multi-workstation computer system as claimed in claim 21, **characterized in that**, the first control unit comprises: a quantity setting unit, used to set a number of extended workstations in the system to be the same as a number of the workstation cards identified so as to correlate the extended workstations and the workstation cards one to one.

26. The equipment configuration module of single-host multi-workstation computer system as claimed in claim 21, **characterized in that**, the equipment configuration module further comprises: an initializing unit, used to make all the separate graphic cards connected to the host and the graphic cards integrated on the workstation cards display a same user interface.

27. The equipment configuration module of single-host multi-workstation computer system as claimed in claim 21, **characterized in that**, the separate graphic card excludes the graphic card integrated on a workstation card, but includes a graphic card integrated on a computer mainboard and a separate graphic card inserted into a computer mainboard.

28. The equipment configuration module as claimed in any one of claim 21, 22, 23, 25, 26 or 27, **characterized in that**, the equipment configuration module further comprises: a re-identification unit, which is used at any moment after the operating steps of the first allocation unit and the second allocation unit; when identifying a new human-machine interaction device, if the device is connected to a workstation card, allocating the device to the extended workstation corresponding to the workstation card; if the device is not connected to a workstation card, allocating the device to the primary workstation.

29. An equipment configuration module of single-host multi-workstation computer system, wherein the system comprises a host, in which installs at least one separate graphic card and at least one workstation card, the workstation card being integrated with a graphic card and an input/output interface; **characterized in that**, the equipment configuration module comprises:
an identification unit, used to identify all the workstation cards connected to the host;
a first control unit, used to correlate each of the workstation cards with an extended workstation;
a second control unit, used to correlate all the separate graphic cards with a primary workstation;
a first allocation unit, used to allocate human-machine interaction devices connected to the same workstation card and the graphic cards integrated on the workstation card to the extended workstation corresponding to the workstation card;
a second allocation unit, used to allocate other human-machine interaction devices to the primary workstation.

30. The equipment configuration module of single-host multi-workstation computer system as claimed in claim 29, **characterized in that**, the human-machine interaction device is selected from one of keyboard, mouse, remote control receiver, joy stick, sound card, speaker, microphone, camera and handwriting pen or the combination.

31. The equipment configuration module of single-host multi-workstation computer system as claimed in claim 29, **characterized in that**, the input/output interface integrated on the workstation card includes a USB port, a PS2 port or a serial port.

32. The equipment configuration module of single-host multi-workstation computer system as claimed in any one of claims 29-31, **characterized in that**, the "human-machine interaction devices connected to the same workstation card" refer to human-machine interaction devices directly connected to the workstation card and/or human-machine interaction devices connected through a USB Hub in connection with a USB port of the workstation card.

33. The equipment configuration module of single-host multi-workstation computer system as claimed in claim 29, **characterized in that**, the first control unit comprises: a quantity setting unit, used to set a number of extended workstations in the system to be the same as a number of the workstation cards identified so as to correlate the extended workstations and the workstation cards one to one.

34. The equipment configuration module of single-host multi-workstation computer system as claimed in claim 29, **characterized in that**, the equipment configuration module further comprises: an initializing unit, used to make all the separate graphic cards connected to the host and the graphic cards integrated on the workstation cards display a same user interface.

35. The equipment configuration module of single-host multi-workstation computer system as claimed in claim 29, **characterized in that**, the separate graphic card excludes the graphic card integrated on a workstation card, but includes a graphic card integrated on a computer mainboard and a separate graphic card inserted into a computer mainboard.

36. The equipment configuration module as claimed in any one of claim 29, 30, 31, 33, 34 or 35, **characterized in that**, the equipment configuration module further comprises: a re-identification unit, which is used at any moment after the operating steps of the first allocation unit and the second allocation unit; when identifying a new human-machine interaction device, if the device is connected to a workstation card, allocating the device to the extended workstation corresponding to the workstation card; if the device is not connected to a workstation card, allocating the device to the primary workstation.
